(19) **Europäisches Patentamt**
**European Patent Office**
**Office européen des brevets**

(11) **EP 1 315 683 B1**

(12) **FASCICULE DE BREVET EUROPEEN**

(45) Date de publication et mention
de la délivrance du brevet:
**13.06.2007 Bulletin 2007/24**

(51) Int Cl.:
*C04B 7/52* *(2006.01)*    *C04B 20/00* *(2006.01)*
*C04B 14/48* *(2006.01)*

(21) Numéro de dépôt: **01967409.2**

(22) Date de dépôt: **31.08.2001**

(86) Numéro de dépôt international:
**PCT/FR2001/002712**

(87) Numéro de publication internationale:
**WO 2002/018291 (07.03.2002 Gazette 2002/10)**

(54) **BETONS FIBRES A TRES HAUTES RESISTANCES ET DUCTILITE**

HOCHFESTER ,HOCHDUKTILER FASERBETON

HIGHLY RESISTANT AND DUCTILE FIBRE CONCRETE

(84) Etats contractants désignés:
**AT BE CH CY DE DK ES FI FR GB GR IE IT LI LU MC NL PT SE TR**

(30) Priorité: **01.09.2000 FR 0011209**

(43) Date de publication de la demande:
**04.06.2003 Bulletin 2003/23**

(73) Titulaire: **LAFARGE**
**75116 Paris (FR)**

(72) Inventeurs:
• **CASANOVA, Pascal**
**W5LZ London (GB)**

• **CHONG, Hu**
**F-69720 St. Bonnet de Mure (FR)**
• **CLAVAUD, Bernard**
**F-38460 CREMIEU (FR)**

(74) Mandataire: **Catherine, Alain et al**
**Cabinet Harlé & Phélip**
**7, rue de Madrid**
**75008 Paris (FR)**

(56) Documents cités:
**EP-A- 0 934 915        WO-A-99/58468**
**FR-A- 2 640 962        FR-A- 2 771 406**
**US-A- 6 080 234**

**EP 1 315 683 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Le domaine de l'invention concerne les bétons fibrés et plus particulièrement les bétons à très haute performance à base de liant hydraulique de type ciment Portland ou similaire et comportant des fibres métalliques.

Le terme « béton» utilisé ci-dessus englobe de manière générale indifféremment les bétons, mortiers ou coulis, dont il sera fait état dans la suite du texte.

Il existe actuellement des bétons à haute performance non fibrés qui présentent l'inconvénient d'être fragiles avec des résistances à la flexion faibles.

Or, pour de nombreux usages en génie civil, et en particulier pour le revêtement de tunnels au moyen de voussoirs préfabriqués, on souhaite des épaisseurs faibles, ce qui nécessite des bétons à haute et très haute performance. Par ailleurs, étant données les conditions sévères auxquelles sont soumis ces voussoirs, on souhaite une résistance à la flexion élevée ainsi qu'une ouvrabilité et une ductilité du béton élevée.

Ceci ne peut être obtenu de manière satisfaisante, sur le plan économique, avec des bétons armés avec des armatures passives classiques, même si ce sont des bétons à très haute performance (résistance à la compression Rc supérieure à 120 MPa). Ces voussoirs classiques sont soumis à des efforts complexes et multidirectionnels. Il faut en particulier que ceux-ci présentent une résistance à la flexion mesurée sur des éprouvettes prismatiques supérieure à 15 MPa, tout en étant ductiles.

On entend par ductilité d'un matériau non élastique tel que le béton, l'aptitude qu'a ce dernier à se déformer au-delà de sa limite élastique sans se rompre d'une manière brutale, et de préférence en exhibant une augmentation de l'effort, ou au moins un plateau.

Par ailleurs, il est souhaitable que ces bétons aient une consistance variable, pouvant aller de ferme à autoplaçante selon les applications.

Il existe actuellement des solutions techniques récentes de bétons à très haute performance comportant des fibres métalliques ou organiques, qui sont ductiles ou dont les performances techniques pourraient répondre à la réalisation d'éléments ayant les caractéristiques visées pour les voussoirs de tunnels.

En particulier, les demandes de brevet WO-99/28267 et EP-934915 proposent des bétons fibrés à très haute performance pouvant répondre aux performances techniques souhaitées. Toutefois, la demande de brevet WO-99/28267 décrit un béton, dont le squelette granulaire comporte des particules fines et ultrafines le rendant très performant mais coûteux pour les usages visés.

Dans la demande de brevet EP-934915, les performances techniques souhaitées, précédemment citées, sont atteintes d'une part au moyen de granulats très durs, tels que la bauxite calcinée qui est un granulat coûteux, d'autre part par l'utilisation de quantités très importantes de particules fines et ultrafines, ce qui rend également le matériaux coûteux.

Outre le fait que ces formulations sont très coûteuses, elles nécessitent, pour leur mise en oeuvre, l'utilisation d'équipements particuliers pour l'introduction des fibres et le malaxage du béton fibré. Il est donc difficile de les mettre en oeuvre dans les unités de béton prêt à l'emploi classiques avec livraison du béton par camion toupie à distance.

Le document FR 2 633 922 décrit un béton compacté renforcé de fibres comprenant, en poids, 36% de diorite 0/6, 50% de diorite 6/10, 14% de ciment hautes performances, 4% d'eau, 80 kg/m$^3$ de béton de fibres de fonte, 10% de poids de ciment de fumée de silice, et 2% du poids de ciment en extrait sec de fluidifiant Sikafluid. Le document US 6,080,234 qui constitue une modification du document FR 2 633 922 décrit un béton qui peut être coulé ou compacté.

L'utilisation des formules de l'art antérieur ne permet pas d'obtenir des solutions satisfaisantes du point de vue économique pour résoudre le problème posé, c'est-à-dire pour réaliser un béton ductile, ayant une résistance à la compression Rc supérieure à 120 MPa et une résistance à la flexion Rfl supérieure ou à égale 15 MPa (les résistances Rc et Rfl étant mesurées sur des éprouvettes cylindriques et prismatiques), et comportant au plus 120 kg de fibres métalliques par m$^3$ de béton, et ce, en utilisant les granulats classiques, tels qu'ils sont disponibles dans les unités classiques de béton prêt à l'emploi ou dans les unités de préfabrication.

Afin de disposer d'un béton répondant à ces critères, la demanderesse a été amenée, pour l'obtention des performances mécaniques recherchées avec des coûts de matériaux beaucoup plus faibles, à employer un concept de formulation différent de l'art antérieur qui consiste à utiliser un squelette granulaire de type appolonien en présence de fibres, et une pâte de liant optimisée du point de vue mécanique et rhéologique; la quantité de pâte dans le béton est déterminée par le degré de desserrement du squelette granulaire nécessaire pour obtenir l'ouvrabilité recherchée,

Un objet de l'invention est donc de proposer un béton à très haute performance avec fibres métalliques ayant des caractéristiques mécaniques moyennes (mesurées sur des éprouvettes cylindriques et prismatiques), c'est-à-dire:

$$Rc > 120 \text{ MPa,}$$

et

$$Rfl \geq 15 \text{ MPa,}$$

tout en étant ductile et comportant au plus 120 kg de fibres métalliques par m³ de béton, et ce, en utilisant des granulats classiques accessibles dans les installations de béton prêt à l'emploi ou les installations d'éléments préfabriqués.

Selon le type d'application, ces bétons pourront avoir une consistance allant de ferme à autoplaçante, la, détermination de cette consistance se faisant selon la norme DIN 1048.

La présente invention a donc pour objet de réaliser avec les constituants habituels des bétons à haute performance, un béton avec fibres métalliques, avec une teneur en fibres métalliques égale ou inférieure à 120 kg/m³, ces bétons permettant, en particulier, de réaliser des voussoirs pour tunnels sans armatures et d'épaisseur pouvant être inférieure à 10 cm.

La composition du béton selon l'invention permet de réaliser des bétons fibrés de performance technique et de coût améliorés par rapport à l'art antérieur. En particulier, la composition peut être élargie à l'utilisation de tout type de fibres dans le béton. Les indices de coût/performance obtenus sont plus favorables que ceux des compositions de bétons fibrés connues à ce jour.

Les buts de la présente invention sont atteints en réalisant un béton ayant une résistance à la flexion Rfl évaluée à l'échéance de 28 jours d'au moins 15 MPa, mesurée sur des éprouvettes prismatiques par des essais en flexion 4 points selon le mode opératoire défini par la norme NF P 18-409 se composant d'une matrice cimentaire durcie dans laquelle sont dispersées des fibres métalliques, obtenu par mélange de constituants comprenant:

a) un ciment dont les particules ont une taille de grain D50 de 10 à 20 $\mu$m;

b) des éléments ultrafins à réaction pouzzolanique dont les particules élémentaires ont une taille de grain D50 d'au plus 1 $\mu$m;

c) des éléments granulaires répartis entre deux classes granulaires $C_1$ et $C_2$ définies de la manière suivante:

$C_1$:     particules de taille supérieure à 1 $\mu$m et inférieure à 5 mm,
$C_2$:     particules de taille allant de 5 à 15 mm, et de préférence de 6 à 12 mm,

d) une quantité d'eau E ajoutée dans le mélange,

e) un agent dispersant, de préférence un superplastifiant, présent dans une proportion en matière sèche de 1,5% à 5% en volume par rapport au ciment,

f) des fibres métalliques, en une quantité au plus égale à 120 kg par m³ de béton, et ayant une longueur individuelle l telle que le béton présente un rapport l/$\phi$ d'au moins 2, et de préférence d'au moins 3, l étant la longueur individuelle des fibres, et $\phi$ étant le diamètre du plus gros grain,

caractérisé en ce que les teneurs des différents constituants (a), (b), $(C_1)$, $(C_2)$, et la quantité d'eau E, exprimées en volume, satisfont aux relations suivantes:

$$\text{ratio 1} \qquad 0,50 \leq (C_2)/(C_1) \leq 1,20$$

$$\text{ratio 2} \qquad 0,25 \leq [(a)+(b)]/[(C_1)+(C_2)] \leq 0,60$$

$$\text{ratio 3} \qquad 0,10 \leq (b)/(a) \leq 0,30$$

$$\text{ratio 4} \qquad 0,50 \leq E/[(a)+(b)] \leq 0,75$$

De manière avantageuse, on a les relations suivantes pour les ratios 1, 3, 4 des teneurs des constituants (a), (b), $(C_1)$, $(C_2)$, et la quantité d'eau E, exprimées en volume:

$$\text{ratio 1} \qquad 0,60 \leq (C_2)/(C_1) \leq 1,0$$

$$\text{ratio 3} \qquad 0{,}15 \leq (b)/(a) \leq 0.25$$

$$\text{ratio 4} \qquad 0{,}55 \leq E/[(a)+(b)] \leq 0{,}70$$

quelle que soit la consistance du béton obtenu.

Selon la consistance désirée du béton, de ferme à autoplaçante, le ratio 2 des constituants (a), (b), $(C_1)$ et $(C_2)$ vérifie les relations suivantes:

1) ratio 2     $0{,}25 \leq [(a)+(b)]/[(C_1)+(C_2)] \leq 0{,}45$ dans le cas d'une consistance ferme à fluide,

2) ratio 2     $0{,}45 \leq [(a)+(b)]/[(C_1)+(C_2)] \leq 0{,}65$ dans le cas d'une consistance autoplaçante,

les ratios 1, 3, 4 restant inchangés que la consistance soit ferme à fluide ou autoplaçante.

La présence de fibres métalliques dans la composition du béton selon l'invention permet de réaliser des voussoirs pour tunnels sans armatures, et également des éléments tels que dalles, plaques, coques ou similaires.

Le ciment (a) de la composition selon l'invention est avantageusement un ciment Portland. De préférence, le ciment de la composition selon l'invention est un ciment Portland HTS, ledit ciment comprenant au moins 20% en poids de silice combinée par rapport au poids du ciment. Le ciment peut également être un ciment à base d'aluminates de calcium, ou tout liant hydraulique à base de laitiers de haut fourneau, ou encore tout liant hydraulique à base de mélanges de ces ciments et/ou laitiers.

Les éléments ultrafins à réaction pouzzolanique (b) sont connus dans la technique. Ils sont généralement choisis parmi les fumées de silice, de préférence les fumées de silice provenant de l'industrie du zirconium ou de l'industrie du silicium.

Les éléments granulaires (c) peuvent être tous éléments granulaires classiquement accessibles pour la fabrication des bétons. Les éléments granulaires (c) sont des gravillons, des sables ou des mélanges de sables, tamisés ou broyés.

Dans un mode de réalisation préférée, les particules de ciment (a) ont une taille de grain D50 de l'ordre de 15 $\mu$m, les éléments ultrafins à réaction pouzzolanique (b) ont une taille de particule D50 inférieure à 1 $\mu$m.

Pour ce qui est des fibres métalliques, elles peuvent être notamment choisies parmi les fibres d'acier à teneur faible en carbone (aciers hypoeutectoïdes), les fibres d'acier à teneur élevée en carbone (aciers eutectoïdes et hypereutectoïdes) qui ont des résistances mécaniques élevées, les fibres d'acier allié ou microallié, les fibres d'acier amorphe ou encore les fibres d'acier inoxydable. On utilisera de préférence des fibres d'acier à faible teneur en carbone ou des fibres d'acier à teneur élevée en carbone.

La quantité de fibres métalliques dans le béton est inférieure ou égale à 120 kg par m$^3$ de béton, généralement de 20 à 120 kg/m$^3$ de béton, et de préférence de 40 à 100 kg par m$^3$ de béton.

Exprimé en volume, les fibres métalliques représentent généralement 1,5% ou moins du volume du béton.

La longueur individuelle l des fibres métalliques est généralement d'au moins deux fois, et de préférence d'au moins trois fois la taille du plus gros grain.

Les fibres d'acier peuvent éventuellement être revêtues d'un métal non ferreux tel que le cuivre, le zinc, le nickel ou leurs alliages.

On peut utiliser des fibres à géométrie variable: elles peuvent être crénelées, ondulées ou crochetées aux extrémités.

On peut également jouer sur la rugosité des fibres et/ou utiliser des fibres à section transversale variable.

La composition selon l'invention comprend également un agent dispersant, de préférence un superplastifiant, présent dans une proportion en matière sèche de 1,5% à 5%, et de préférence de 2,5% à 3,5% en volume par rapport au ciment.

Les superplastifiants sont des constituants classiques des bétons qui ont pour objet d'améliorer la rhéologie du béton. Parmi ces superplastifiants, on recommandera particulièrement les phosphonates polyoxyéthylénés POE, les polycarboxylates polyox PCP, et leurs mélanges. Ces superplastifiants sont des produits disponibles dans le commerce; à titre d'exemple, on peut citer les produits OPTIMA 100®, PREMIA 100® et OPTIMA 175® commercialisés par la Société CHRYSO.

Les bétons selon l'invention peuvent également comporter outre divers additifs, tels que notamment des pigments de coloration, des agents dispersants, des agents antimousses, des agents antiressuage ou des agents antisédimentation, des agents accélérateurs de prise ou des émulsions aqueuses de produits organiques bien connus de l'homme du métier.

Les bétons selon l'invention peuvent également comporter des fibres courtes (longueur d'au plus 2 mm, de préférence d'au plus 1 mm) d'alcool polyvinylique, de polyacrylonitrile, de polyéthylène haute densité, de polyamide d'aramide ou de polypropylène.

On prépare le béton selon toute méthode connue de l'homme du métier, notamment par gâchage des constituants solides et de l'eau, mise en forme (moulage) puis durcissement.

D'une manière générale, la maturation du béton obtenue peut se faire:

- soit sous forme d'une conservation à 20°C et plus de 90% d'humidité relative,
- soit en réalisant un traitement thermique dès la mise en place dans le moule,
- soit en réalisant un traitement thermique à partir d'une échéance prédéterminée, avant laquelle il aura été conservé à 20°C et plus de 90% d'humidité relative dès la mise en place dans le moule.

Ce traitement thermique sera réalisé à une température comprise entre 20°C et 100°C.

Les bétons obtenus selon la présente invention présentent:

- une résistance à la flexion Rfl mesurée sur des éprouvettes prismatiques, supérieure ou égale à 15 MPa.
- une résistance à la compression Rc mesurée sur des éprouvettes cylindriques, supérieure ou égale à 120 MPa,

lesdites résistances à la flexion Rfl et à la compression Rc étant évaluées à l'échéance de 28 jours.

**Béton correspondant aux exemples 1 et 2**

**1) Matières premières**

- Pour que les comparaisons effectuées aient leur pleine signification, les mêmes constituants indiqués ci-après ont été mis en oeuvre pour l'ensemble des exemples.
- ciment:

    - ciment Portland à haute teneur en silice type HTS (CPA- CEM 1 52,5), de la société LAFARGE CIMENTS FRANCE,
    - ciment Portland type 50 (selon norme canadienne CSA) de la société LAFARGE CORPORATION.

- éléments granulaires:

    - sable alluvionnaire GRENADE 0/4 de la société LAFARGE GRANULATS FRANCE,
    - gravillons LE TERTRE 6/10 (roche sédimentaire silicatée) de la société LAFARGE GRANULATS FRANCE,
    - sable siliceux GSI 0/0.315 de la société SIFRACO,
    - gravillon granit 6/12
    - sable siliceux 0/5
    - sable siliceux 0/0,5

- additions cimentaires:

    - cendres volantes de la société SUNDANCE

- éléments ultrafins à réaction pouzzolanique:

    - fumées de silice: microsilice vitreuse ELKEM 940 U
    - fumées de silice SKW

- adjuvants superplastifiants:

    - phosphonate polyoxyéthyléné (POE), OPTIMA 100® , de la société CHRYSO, FRANCE
    - mélange de phosphonate polyoxyéthyléné (POE) et de polycarboxylate polyox (PCP), OPTIMA 175® de la société CHRYSO, France.

- fibres métalliques

Fibres A:
Fibres d'acier DRAMIX RC 80-60 LC fournies par la société BEKAERT, sous forme de plaquettes constituées d'une trentaine de fibres encollées (fibres à crochet, faible teneur en carbone, cylindriques, longueur $l_f$ = 60 mm et diamètre $d_f$ = 0,8 mm),

Fibres B:
Fibres d'acier DRAMIX RC 80-60 HC fournies par la société BEKAERT, analogues aux fibres A mais avec une haute teneur en carbone,

Fibres C:
Fibres d'acier fournies par la société NOVOCON (fibres ondulées à section rectangulaire $l_f$ = 50 mm, $a_f$ = 2,5 mm, $b_f$ = 0,4 mm).

**2) Mode de préparation**

Dans l'exemple 1, la fabrication du béton a été faite en laboratoire avec un malaxeur SKAKO. Au cours de l'étape de préparation du béton, les constituants sont malaxés dans l'ordre suivant:

- introduction des granulats dans le malaxeur.
- introduction de l'eau de mouillage pendant 30 secondes
- malaxage des granulats humides pendant 30 secondes,
- repos pendant 4 minutes,
- introduction des liants pendant 30 secondes,
- malaxage pendant 1 minute,
- introduction de l'eau de gâchage et des adjuvants,
- malaxage du béton pendant 3 minutes,
- introduction de la moitié des fibres métalliques en les répartissant sur la surface du béton,
- mise en route du malaxeur et introduction de l'autre moitié des fibres pendant 30 secondes,
- malaxage du béton pendant 1 minute.

Dans l'exemple 2, un malaxeur industriel a été utilisé. Le mode de préparation du béton est le suivant:

- introduction de tous les constituants, sauf les fibres
- malaxage à sec pendant 1 minute
- introduction de l'eau et du superplastifiant
- malaxage pendant 5 minutes
- introduction des fibres
- malaxage pendant 1 minute
  Les moules sont alors remplis, puis vibrés pour les bétons de consistance ferme à fluide, et sans vibration pour les bétons de consistance autoplacante.

**3) Maturation**

Les éprouvettes sont soit immédiatement soumises à un traitement thermique comme défini précédemment, soit conservées sous eau à 20°C, puis éventuellement soumises à un traitement thermique comme défini précédemment, à partir d'une échéance prédéterminée.

**<u>Méthodes de mesure</u>**

**1) Mesure de l'étalement**

Pour les bétons à faible fluidité, le principe de la mesure consiste à mesurer le diamètre de la galette de béton formée après que le béton démoulé a été soumis aux chocs. La méthode de mesure de l'étalement est décrite dans la norme DIN 1048.

Pour les bétons à fluidité élevée, la même méthode est utilisée, mais sans choc.

Pour tous les essais, les mesures d'étalement sont réalisées après l'ajout des fibres métalliques. Les différentes consistances correspondent aux étalements suivants:

consistance ferme: étalement DIN avec chocs inférieur ou égal à 350 mm,
consistance plastique: étalement DIN, avec chocs, de 350 à 450 mm,

consistance fluide: étalement DIN, sans choc, de 450 à 600 mm,
consistance autoplaçante: étalement DIN, sans choc, supérieur ou égal à 600 mm.

Les mesures d'étalement sont réalisées, soit dès la fin de la confection du béton à (to), soit une heure après la fin de la confection du béton à (to + 1 h), ce qui correspond à une durée pratique d'utilisation courante.

**3) Mesure des résistances mécaniques en flexion et en compression**

Le principe de la mesure consiste à déterminer les valeurs de

- résistance à la flexion Rfl sur des éprouvettes prismatiques de dimensions 10 cm x 10 cm x 40 cm par des essais en flexion 4 points, selon le mode opératoire défini par la norme NF P 18-409,
- résistance à la compression Rc sur des éprouvettes cylindriques de dimensions $\phi$ = 11 cm x h = 22 cm, selon le mode opératoire défini par la norme NF P 18-406.

**EXEMPLE 1**

On a préparé divers bétons fibrés selon l'invention, désignés dans la suite du texte par R2 et O3 à O5.
Dans le tableau 1, figurent les compositions (exprimées en kg/m$^3$) des bétons R2, O3 à O5, ainsi que les valeurs de ratios 1 à 5 des teneurs des constituants (a), (b), (C1), (C2), et E tels que définis précédemment.

TABLEAU 1

| Composants | | en kg/m$^3$ | | | |
|---|---|---|---|---|---|
| Type | Nature | R2 | O3 | O4 | O5 |
| Gravillon | Le Tertre 6/10 | 892 | 744 | 665 | 575 |
| Sable | Grenade 0/4 | 498 | 428 | 386 | 509 |
| Sable fin | GSI 0/0.315 | 326 | 362 | 328 | 290 |
| Ciment | CEM I 52,5 HTS Le Teil | 482 | 622 | 723 | 725 |
| Fumée silice | ELKEM 940 U | 67 | 87 | 101 | 101 |
| Eau | eau efficace | 120 | 137 | 159 | 159 |
| Superplastifiant | OPTIMA 100 | 14,9 | 18,7 | 21,7 | 21,7 |
| Fibres métalliques | Dramix RC 80-60 LC | - | 80 | - | 80 |
| Fibres métalliques | Dramix RC 80-60 HC | 80 | - | 80 | - |
| | Ratio 1 | 1,11 | 0,97 | 0,95 | 0,74 |
| | Ratio 2 | 0,28 | 0,40 | 0,51 | 0,52 |
| | Ratio 3 | 0,20 | 0,20 | 0,20 | 0,20 |
| | Ratio 4 | 0,67 | 0,59 | 0,59 | 0,59 |

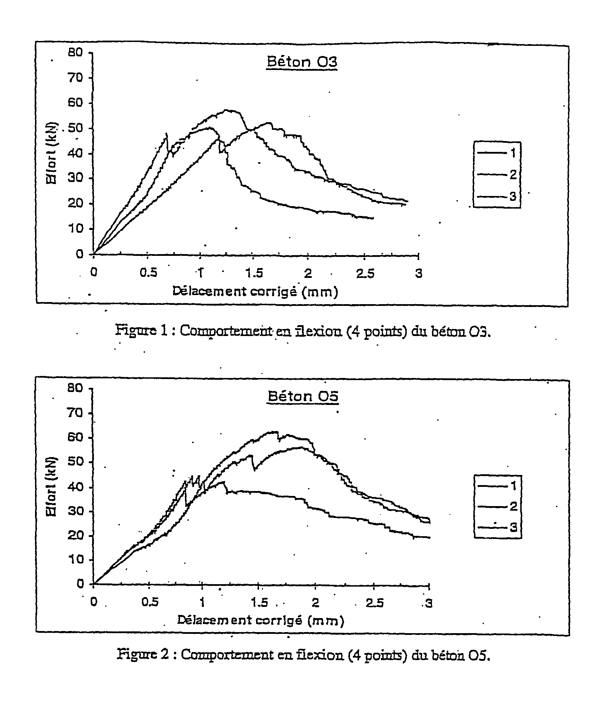

Les valeurs des ratios 1 à 4 satisfont aux spécifications requises.
Etant donné que les compositions des bétons R2, O3 à O5 ne comportent pas d'additions cimentaires (d), la valeur du ratio 5 est nulle.
Ces bétons comportent moins de 120 kg de fibres métalliques par m$^3$.
Les performances rhéologiques et mécaniques de ces bétons sont présentées dans le tableau 2, ainsi que sur les figures 1 et 2.

TABLEAU 2

| RESULTATS DES ESSAIS | | | | | |
|---|---|---|---|---|---|
| Nature caractéristique | Exprimé en | R2 | O3 | O4 | O5 |
| Etal. DIN sans choc (to) | Mm | - | 480 | 640 | 690 |
| Etal. DIN avec chocs (to) | Mm | 330 | 550 | - | - |
| Etal DIN sans choc (to+ 1h) | Mm | - | - | - | 600 |
| Résistance compression 28 j | MPa | 141 | 148 | 146 | 144 |
| Résistance flexion 28 j | MPa | 19,3 | 16,3 | 21,1 | 16,3 |

D'après ce tableau 2, tous les bétons (R2, O3 à O5) satisfont aux spécifications suivantes:

- une résistance à la flexion Rfl à 28 jours supérieure à 15 MPa, et
- une résistance à la compression Rc à 28 jours supérieure à 120 MPa.

Le tableau 2 montre également que ces spécifications sont satisfaisantes pour des bétons fermes, fluides et autoplacants, respectivement R2, 03, 04 et 05. Les bétons autoplacants sont des bétons présentant un étalement sans choc supérieur à 600 mm. Les résultats d'étalement du béton désigné par la référence 05 montre que l'on est capable de réaliser un béton autoplaçant avec maintien de la rhéologie pendant au moins 1 heure.

Les figures 1 et 2 représentent chacune trois courbes obtenues par des essais de flexion quatre points, avec en ordonnée les valeurs d'effort (kN) et en abscisse les valeurs de déplacement corrigé respectivement pour les échantillons des bétons O3 et O5.

Les essais sont réalisés selon la norme NF P 18-409; les valeurs de déplacement subissent une correction selon les règles de l'art bien connues de l'homme du métier, due au déplacement qui se produit lors de la mise en place de l'essai.

Les trois courbes correspondent chacune à un essai réalisé sur une éprouvette (trois éprouvettes testées).

Les figures 1 et 2 montrent que les bétons O3 et O5 ont un comportement ductile en flexion.

L'exemple 2 suivant qui ne fait pas partie de l'invention, en illustre néanmoins certains aspects.

## EXEMPLE 2

On a préparé, en procédant comme à l'exemple 1, un béton fibré selon l'invention désigné dans la suite du texte par 06, dans lequel on a ajouté des additions cimentaires (cendres volantes). La composition de ce béton O6 est présentée dans le tableau 3 ci-après.

TABLEAU 3

| Composants | | en kg/m$^3$ |
|---|---|---|
| Type | Nature | 06 |
| Gravillon | granite 6/12 mm | 830 |
| Sable | siliceux 0/5 mm | 692 |
| Sable fin | siliceux 0/05 mm | 266 |
| Ciment | Portland EXSHAW type 50 | 468 |
| Cendres volantes | Sundance | 43 |
| Fumée silice | SKW | 56 |
| Eau | eau efficace | 109 |
| Superplastifiant | OPTIMA 175 | 21,5 |
| Fibres métalliques | NOVOCON | 40 |
| | ratio 1 | 0,86 |
| | ratio 2 | 0,29 |
| | ratio 3 | 0,18 |
| | ratio 4 | 0,56 |
| | ratio 5 | 0,14 |

Le ratio 5 est le rapport volumique des cendres volantes au ciment.

Les résultats des essais de compression montrent que ce béton présente, à 28 jours, une résistance à la compression de 132 MPa.

## Revendications

1. Béton ayant une résistance à la flexion Rfl évaluée à l'échéance de 28 jours d'au moins 15 MPa, mesurée sur des éprouvettes prismatiques par des essais en flexion 4 points selon le mode opératoire défini par la norme NF P 18-409, dans lequel sont dispersées des fibres métalliques, obtenu par mélange avec de l'eau d'une composition comprenant:

a) un ciment dont les particules ont une taille de grain D50 de 10 $\mu$m à 20 $\mu$m,
b) des éléments ultrafins à réaction pouzzolanique dont les particules élémentaires ont une taille de grain D50 d'au plus 1 $\mu$m,
c) des éléments granulaires répartis entre deux classes granulaires

$C_1$ et $C_2$ définies de la manière suivante :
$C_1$: particules de taille supérieure à 1 $\mu$m et inférieure à 5 mm ;
$C_2$: particules de taille allant de 6 à 12 mm,

d) une quantité d'eau E ajoutée dans le mélange,
e) un agent dispersant, de préférence un superplastifiant, présent dans une proportion en matière sèche de 1,5% à 5% en volume par rapport au ciment,
f) des fibres métalliques présentes en une quantité au plus égale à 120 kg par m$^3$ de béton, ayant une longueur individuelle l telle que le béton présente un rapport l/$\phi$ d'au moins 2, et de préférence d'au moins 3, l étant la longueur individuelle des fibres et $\phi$ étant le diamètre des plus gros grains,

**caractérisé en ce que** les teneurs des différents constituants (a), (b), $(C_1)$, $(C_2)$, et la quantité d'eau E, exprimées en volume, satisfont aux relations suivantes:

$$\text{ratio 1} \qquad 0{,}50 \leq (C_2)/(C_1) \leq 1{,}20$$

$$\text{ratio 2} \qquad 0{,}25 \leq [(a)+(b)]/[(C_1)+(C_2)] \leq 0{,}60$$

$$\text{ratio 3} \qquad 0{,}10 \leq (b)/(a) \leq 0{,}30$$

$$\text{ratio 4} \qquad 0{,}50 \leq E/[(a)+(b)] \leq 0{,}75$$

**2.** Béton selon la revendication 1, **caractérisé en ce que**:

a) les particules de ciment (a) ont une taille de grain D50 de l'ordre de 15 $\mu$m,
b) les éléments ultrafins à réaction pouzzolanique (b) ont une taille de particule D50 inférieure à 1 $\mu$m.

**3.** Béton selon la revendication 1 ou 2, **caractérisé en ce que** l'on a la relation suivante pour le ratio 2 des teneurs des constituants (a), (b), $(C_1)$, $(C_2)$, exprimées en volume:

$$\text{ratio 2} \qquad 0{,}25 \leq [(a)+(b)] / [(C_1)+(C_2)] \leq 0{,}45$$

dans le cas où le béton obtenu a une consistance ferme à fluide.

**4.** Béton selon la revendication 1 ou 2, **caractérisé en ce que** l'on a la relation suivante pour le ratio 2 des teneurs des constituants (a), (b), $(C_1)$, $(C_2)$ exprimées en volume:

$$\text{ratio 2} \qquad 0{,}45 \leq [(a)+(b)]/[(C_1)+(C_2)] \leq 0{,}60$$

dans le cas où le béton obtenu a une consistance autoplaçante.

**5.** Béton selon l'une quelconque des revendications précédentes, **caractérisé en ce que** l'on a les relations suivantes pour les ratios 1, 3, 4 des teneurs des constituants (a), (b), $(C_1)$, $(C_2)$ et la quantité d'eau E, exprimées en volume:

$$\text{ratio 1} \qquad 0,60 \leq (C_2)/(C_1) \leq 1,0$$

$$\text{ratio 3} \qquad 0,15 \leq (b)/(a) \leq 0,25$$

$$\text{ratio 4} \qquad 0,55 \leq E/[(a)+(b)] \leq 0,70$$

quelle que soit la consistance du béton obtenu.

6. Béton selon l'une des revendications précédentes, **caractérisé en ce que** le ciment est un ciment à haute teneur en silice, ledit ciment comprenant au moins 20% en poids de silice combinée par rapport au poids du ciment.

7. Béton selon l'une des revendications précédentes, **caractérisé en ce que** la quantité de fibres métalliques dans le béton est de 20 à 120 kg/m$^3$, et de préférence de 40 à 100 kg/m$^3$ de béton.

8. Béton selon l'une quelconque des revendications précédentes, **caractérisé en ce que** les fibres métalliques sont des fibres d'acier.

9. Béton selon la revendication 8, **caractérisé en ce que** les fibres d'acier ont une teneur élevée en carbone de 0,7% à 0,8%.

10. Béton selon la revendication 8, **caractérisé en ce que** les fibres d'acier ont une faible teneur en carbone, inférieure ou égale à 0,1%.

11. Béton selon l'une des revendications précédentes, **caractérisée en ce qu'**il comporte également des fibres courtes d'alcool polyvinylique, de polyacrilonitrile, de polyéthylène haute densité, de polyamide d'aramide ou de polypropylène.

12. Béton selon l'une quelconque des revendications précédentes, **caractérisé en ce qu'**il comporte un superplastifiant, présent dans une proportion en matière sèche de 1,5% à 5% en volume et de préférence de 2,5% à 3,5% en volume, par rapport au ciment.

13. Béton selon l'une des revendications précédentes, **caractérisé en ce que** le superplastifiant est choisi parmi les phosphonates polyoxyéthylénés, les polycarboxylates polyox et leurs mélanges.

14. Béton selon l'une des revendications précédentes **caractérisé en ce qu'**il présente:

    • une résistance à la compression Rc mesurée sur des éprouvettes cylindriques supérieure ou égale à 120 MPa,

    la résistance à la compression étant évaluée à l'échéance de 28 jours

15. Béton selon l'une des revendications précédentes, **caractérisé en ce que** les éléments ultrafins à réaction pouzzolanique (b) sont constitués par de la fumée de silice.

16. Béton selon l'une des revendications précédentes, **caractérisé en ce que** les éléments granulaires (c) sont des granulats ou des mélanges de granulats, tamisés ou broyés.

17. Voussoirs, dalles, éléments de type plaques ou coques, **caractérisés en ce qu'**ils sont constitués d'un béton selon l'une quelconque des revendications 1 à 16.

18. Elément préfabriqué **caractérisé en ce qu'**il est constitué d'un béton tel que défini selon l'une quelconque des revendications 1 à 16.

19. Procédé de fabrication d'un béton ayant une résistance à la flexion Rfl évaluée à l'échéance de 28 jours d'au moins 15 MPa, mesurée sur des éprouvettes prismatiques par des essais de flexion 4 points selon le mode opératoire défini par la norme NF 18-409, dans lequel sont dispersées des fibres métalliques comprenant le mélange d'une quantité d'eau E à une composition comprenant:

a) un ciment dont les particules ont une taille de grain D50 de 10 $\mu$m à 20 $\mu$m,

b) des éléments ultrafins à réaction pouzzolanique dont les particules élémentaires ont une taille de grain D50 d'au plus 1 $\mu$m,

c) des éléments granulaires répartis entre deux classes granulaires $C_1$ et $C_2$ définies de la manière suivante :

$C_1$: particules de taille supérieure à 1 $\mu$m et inférieure à 5 mm ;

$C_2$: particules de taille allant de 6 à 12 mm,

e) un agent dispersant, de préférence un superplastifiant, présent dans une proportion en matière sèche de 1,5% à 5% en volume par rapport au ciment,

f) des fibres métalliques présentes en une quantité au plus égale à 120 kg par m$^3$ de béton, ayant une longueur individuelle l telle que le béton présente un rapport l/$\phi$ d'au moins 2, et de préférence d'au moins 3, l étant la longueur individuelle des fibres et $\phi$ étant le diamètre des plus gros grains,

**caractérisé en ce que** les teneurs des différents constituants (a), (b), ($C_1$), ($C_2$), et la quantité d'eau E, exprimées en volume, satisfont aux relations suivantes:

$$\text{ratio 1} \qquad 0{,}50 \leq (C_2)/(C_1) \leq 1{,}20$$

$$\text{ratio 2} \qquad 0{,}25 \leq [(a)+(b)]/[(C_1)+(C_2)] \leq 0{,}60$$

$$\text{ratio 3} \qquad 0{,}10 \leq (b)/(a) \leq 0{,}30$$

$$\text{ratio 4} \qquad 0{,}50 \leq E/[(a)+(b)] \leq 0{,}75$$

**20.** Procédé selon la revendication 19, **caractérisé en ce que**:

a) les particules de ciment (a) ont une taille de grain D50 de l'ordre de 15 $\mu$m,

b) les éléments ultrafins à réaction pouzzolanique (b) ont une taille de particule D50 inférieure à 1 $\mu$m.

**21.** Procédé selon la revendication 19 ou 20, **caractérisé en ce que** l'on a la relation suivante pour le ratio 2 des teneurs des constituants (a), (b), ($C_1$), ($C_2$), exprimées en volume:

$$\text{ratio 2} \qquad 0{,}25 \leq [(a)+(b)] / [(C_1)+(C_2)] \leq 0{,}45$$

dans le cas où le béton obtenu a une consistance ferme à fluide.

**22.** Procédé selon la revendication 19 ou 20, **caractérisé en ce que** l'on a la relation suivante pour le ratio 2 des teneurs des constituants (a), (b), ($C_1$), ($C_2$), exprimées en volume:

$$\text{ratio 2} \qquad 0{,}45 \leq [(a)+(b)]/[(C_1)+(C_2)] \leq 0{,}60$$

dans le cas où le béton obtenu a une consistance autoplaçante.

**23.** Procédé selon l'une quelconque des revendications 19 à 22, **caractérisé en ce que** l'on a les relations suivantes pour les ratios 1, 3, 4, 5, des teneurs des constituants (a), (b), ($C_1$), ($C_2$), et la quantité d'eau E, exprimées en volume:

$$\text{ratio 1} \quad 0,60 \leq (C_2)/(C_1) \leq 1,0$$

$$\text{ratio 3} \quad 0,15 \leq (b)/(a) \leq 0,25$$

$$\text{ratio 4} \quad 0,55 \leq E/[(a)+(b)] \leq 0,70$$

quelle que soit la consistance du béton obtenu.

24. Procédé selon l'une des revendications 19 à 23, **caractérisé en ce que** le ciment est un ciment à haute teneur en silice, ledit ciment comprenant au moins 20% en poids de silice combinée par rapport au poids du ciment.

25. Procédé selon l'une des revendications 19 à 24, **caractérisé en ce que** la quantité de fibres métalliques dans le béton est de 20 à 120 kg/m$^3$, et de préférence de 40 à 100 kg/m$^3$ de béton.

26. Procédé selon l'une quelconque des revendications 19 à 25 **caractérisé en ce que** les fibres métalliques sont des fibres d'acier.

27. Procédé selon la revendication 26, **caractérisé en ce que** les fibres d'acier ont une teneur élevée en carbone de 0,7% à 0,8%.

28. Procédé selon la revendication 26, **caractérisé en ce que** les fibres d'acier ont une faible teneur en carbone, inférieure ou égale à 0,1 %.

29. Procédé selon l'une des revendications 19 à 28, **caractérisée en ce qu'**il comporte également des fibres courtes d'alcool polyvinylique, de polyacrilonitrile, de polyéthylène haute densité, de polyamide d'aramide ou de polypropylène.

30. Procédé selon l'une quelconque des revendications 19 à 29 **caractérisé en ce qu'**il comporte un superplastifiant, présent dans une proportion en matière sèche de 1,5% à 5% en volume et de préférence de 2,5% à 3,5% en volume, par rapport au ciment.

31. Procédé selon l'une des revendications 19 à 30, **caractérisé en ce que** le superplastifiant est choisi parmi les phosphonates polyoxyéthylénés, les polycarboxylates polyox et leurs mélanges.

32. Procédé selon l'une des revendications 19 à 31 **caractérisé en ce que** le béton présente:

   • une résistance à la compression Rc mesurée sur des éprouvettes cylindriques supérieure ou égale à 120 MPa,

   la résistance à la compression étant évaluée à l'échéance de 28 jours

33. Procédé selon l'une des revendications 19 à 32, **caractérisé en ce que** les éléments ultrafins à réaction pouzzolanique (b) sont constitués par de la fumée de silice

34. Procédé selon l'une des revendications 19 à 33, **caractérisé en ce que** les éléments granulaires (c) sont des granulats ou des mélanges de granulats, tamisés ou broyés.

35. Procédé selon l'une des revendications 19 à 34, **caractérisé en ce qu'**il est mis en oeuvre dans une centrale de béton prêt à l'emploi.

36. Procédé selon l'une des revendications 19 à 34, **caractérisé en ce qu'**il est mis en oeuvre dans une centrale d'usine de préfabrication.

**Claims**

1. A concrete having a flexure strength Rfl evaluated at the end of a 28 day time of at least 15 MPa measured on prismatic samples with 4 points bending tests according to the method of standard NF 18-409 in which metallic fibres are dispersed, obtained through mixing with water a composition comprising:

   a) a cement with particles having a grain size D50 ranging from 10 to 20 $\mu$m;
   b) ultrafine elements with a pouzzolanic reaction, the element particles of which have a grain size D50 of maximum 1 $\mu$m;
   c) granular elements distributed into two granular classes $C_1$ and $C_2$ defined as follows:

   $C_1$: particles with a size higher than 1 $\mu$m and lower than 5 mm,
   $C_2$: particles with a size ranging from 6 to 12 mm;

   d) an amount of water E added in the blend;
   e) a dispersant, preferably a superplasticizer, being present in a dry matter proportion ranging from 1.5 to 5% by volume based on the cement;
   f) metallic fibres, in an amount maximum equal to 120 kg per m$^3$ of concrete and having an individual length l such that the concrete has a l/$\phi$ ratio of at least 2, and preferably at least 3, l being the fibre individual length and $\phi$ being the diameter of the biggest grains;

   **characterized in that** the contents of the various components (a), (b), ($C_1$), ($C_2$), and the amount of water (E), mentioned in volume, meet the following relationships:

   $$\text{ratio 1: } 0.50 \leq (C_2) / (C_1) \leq 1.20$$

   $$\text{ratio 2: } 0.25 \leq [(a) + (b)] / [(C_1) + (C_2)] \leq 0.60$$

   $$\text{ratio 3: } 0.10 \leq (b) / (a) \leq 0.30$$

   $$\text{ratio 4: } 0.50 \leq E / [(a) + (b)] \leq 0.75$$

2. A concrete according to claim 1, **characterized in that**:

   a) the cement particles (a) have a grain size D50 of about 15 $\mu$m,
   b) the ultrafine elements with a pouzzolanic reaction (b) have a particle size D50 lower than 1 $\mu$m.

3. A concrete according to claim 1 or 2, **characterized in that** the following relationship is obtained for ratio 2 of the contents of the components (a), (b), ($C_1$), ($C_2$), mentioned in volume:

   $$\text{ratio 2: } 0.25 \leq [(a) + (b)] / [(C_1) + (C_2)] \leq 0.45$$

   in the case when the resulting concrete has a firm to fluid consistency.

4. A concrete according to claim 1 or 2, **characterized in that** the following relationship is obtained for ratio 2 of the contents of the components (a), (b), ($C_1$), ($C_2$), mentioned in volume:

   $$\text{ratio 2: } 0.45 \leq [(a) + (b)] / [(C_1) + (C_2)] \leq 0.60$$

   in the case when the resulting concrete has an autoconforming consistency.

5. A concrete according to any one of the preceding claims, **characterized in that** the following relationships are obtained for ratios 1, 3, 4, of the contents of the components (a), (b), $(C_1)$, $(C_2)$, and the amount of water E, mentioned in volume:

$$\text{ratio 1: } 0.60 \leq (C_2) / (C_1) \leq 1.0$$

$$\text{ratio 3: } 0.15 \leq (b) / (a) \leq 0.25$$

$$\text{ratio 4: } 0.55 \leq E / [(a) + (b)] \leq 0.70$$

whatever the consistency of the resulting concrete is.

6. A concrete according to any one of the preceding claims, **characterized in that** the cement is a high silica content cement, said cement comprising at least 20% by weight of combined silica based on the cement weight.

7. A concrete according to any one of the preceding claims, **characterized in that** the amount of metallic fibres in the concrete ranges from 20 to 120 kg/m$^3$, and preferably from 40 to 100 kg per m$^3$ of concrete.

8. A concrete according to any one of the preceding claims, **characterized in that** the metallic fibres are steel fibres.

9. A concrete according to claim 8, **characterized in that** the steel fibres have a high carbon content ranging from 0.7% to 0.8%.

10. A concrete according to claim 8, **characterized in that** the steel fibres have a low carbon content, lower than or equal to 0.1 %.

11. A concrete according to any one of the preceding claims, **characterized in that** it also comprises short fibres of polyvinyl alcohol, polyacrylonitrile, high density polyethylene, aramid polyamide or polypropylene.

12. A concrete according to any one of the preceding claims, **characterized in that** it comprises a superplasticizer present in a dry matter proportion ranging from 1.5 to 5% by volume, and preferably 2.5 to 3.5% by volume based on the cement.

13. A concrete according to any one of the preceding claims, **characterized in that** the superplasticizer is selected amongst the polyoxyethylenated phosphonates, the polyox polycarboxylates and the mixtures thereof.

14. A concrete according to any one of the preceding claims, **characterized in that** it shows:

   • a compression strength Rc measured on cylindrical samples, higher than or equal to 120 MPa,

   said compression strength being evaluated at the end of a 28 day time.

15. A concrete according to any one of the preceding claims, **characterized in that** the ultrafine elements with a pouzzolanic reaction (b) comprise silica fumes.

16. A concrete according to any one of the preceding claims, **characterized in that** the granular elements (c) are sieved or ground granulates or mixtures of granulates.

17. Voussoirs, tiles, plate or shell elements, **characterized in that** they are made from a concrete according to any one of claims 1 to 16.

18. A prefab element **characterized in that** it is made from a concrete such as defined according to any one of claims 1 to 16.

**19.** A method for producing a concrete having a flexure strength Rfl evaluated at the end of a 28 day time pf at least 15 MPa measured on prismatic samples with 4 points bending tests according to the method of standard NF 18-409 in which metallic fibres are dispersed, comprising mixing an amount of water E with a composition comprising:

a) a cement with particles having a grain size D50 ranging from 10 to 20 $\mu$m;

b) ultrafine elements with a pouzzolanic reaction, the element particles of which have a grain size D50 of maximum 1 $\mu$m;

c) granular elements distributed into two granular classes $C_1$ and $C_2$ defined as follows:

- $C_1$ : particles with a size higher than 1 $\mu$m and lower than 5 mm,
- $C_2$ : particles with a size ranging from 6 to 12 mm;

d) a dispersant, preferably a superplasticizer, present in a dry matter proportion ranging from 1.5 to 5% by volume based on the cement;

e) metallic fibres in an amount maximum equal to 120 kg per m³ of concrete and having an individual length l such that the concrete has a l/$\phi$ ratio of at least 2, and preferably of at least 3, l being the individual length of the fibres and $\phi$ being the diameter of the biggest grains;

**characterized in that** the contents of the various components (a), (b), $(C_1)$, $(C_2)$, and the amount of water (E), mentioned in volume, meet the following relationships:

$$\text{ratio 1: } 0.50 \leq (C_2) / (C_1) \leq 1.20$$

$$\text{ratio 2: } 0.25 \leq [(a) + (b)] / [(C_1) + (C_2)] \leq 0.60$$

$$\text{ratio 3: } 0.10 \leq (b) / (a) \leq 0.30$$

$$\text{ratio 4: } 0.50 \leq E/[(a) + (b)] \leq 0.75$$

**20.** A method according to claim 19, **characterized in that**:

a) the cement particles (a) have a grain size D50 of about 15 $\mu$m, and

b) the ultrafine elements with a pouzzolanic reaction (b) have a particle size D50 lower than 1 $\mu$m.

**21.** A method according to claim 19 or 20, **characterized in that** the following relationship is obtained for ratio 2 of the contents of the components (a), (b), $(C_1)$, $(C_2)$, mentioned in volume

$$\text{ratio 2: } 0.25 \leq [(a) + (b)] / [(C_1) + (C_2)] \leq 0.45$$

in the case when the resulting concrete has a firm to fluid consistency.

**22.** A method according to claim 19 or 20, **characterized in that** the following relationship is obtained for ratio 2 of the contents of the components (a), (b), $(C_1)$, $(C_2)$, mentioned in volume:

$$\text{ratio 2: } 0.45 \leq [(a) + (b)] / [(C_1) + (C_2)] \leq 0.60$$

in the case when the resulting concrete has a autoconforming consistency.

**23.** A method according to any one of claims 19 to 22, **characterized in that** the following relationships are obtained for ratios 1, 3, 4, 5, of the contents of the components (a), (b), $(C_1)$, $(C_2)$, and the amount of water E, mentioned in volume:

$$\text{ratio 1: } 0.60 \leq (C_2) / (C_1) \leq 1.0$$

$$\text{ratio 3: } 0.15 \leq (b) / (a) \leq 0.25$$

$$\text{ratio 4: } 0.55 \leq E / [(a) + (b)] \leq 0.70$$

whatever the consistency of the resulting concrete is.

24. A method according to any one of claims 19 to 23, **characterized in that** the cement is a high silica content cement, said cement comprising at least 20% by weight of combined silica based on the cement weight.

25. A method according to any one of claims 19 to 24, **characterized in that** the amount of metallic fibres in the concrete ranges from 20 to 120 kg/m$^3$, and preferably from 40 to 100 kg per m$^3$ of concrete.

26. A method according to any one of claims 19 to 25, **characterized in that** the metallic fibres are steel fibres.

27. A method according to claim 26, **characterized in that** the steel fibres have a high carbon content ranging from 0.7% to 0.8%.

28. A method according to claim 26, **characterized in that** the steel fibres have a low carbon content, lower than or equal to 0.1 %.

29. A method according to any one of claims 19 to 28, **characterized in that** it also comprises short fibres of polyvinyl alcohol, polyacrylonitrile, high density polyethylene, aramid polyamide or polypropylene.

30. A method according to any one of claims 19 to 29, **characterized in that** it comprises a superplasticizer, present in a dry matter proportion ranging from 1.5 to 5% by volume, and preferably 2.5 to 3.5% by volume based on the cement.

31. A method according to any one of claims 19 to 30, **characterized in that** the superplasticizer is selected amongst the polyoxyethylenated phosphonates, the polyox polycarboxylates and the mixtures thereof.

32. A method according to any one of claims 19 to 31, **characterized in that** the concrete shows:

    • a compression strength Rc measured on cylindrical samples, higher than or equal to 120 MPa,

said compression strength being evaluated at the end of a 28 day time.

33. A method according to any one of claims 19 to 32, **characterized in that** the ultrafine elements with a pouzzolanic reaction (b) comprise silica fumes.

34. A method according to any one of claims 19 to 33, **characterized in that** the granular elements (c) are sieved or ground granulates or mixtures of granulates.

35. A method according to any one of claims 19 to 34, **characterized in that** it is produced in a ready to use concrete plant.

36. A method according to any one of claims 19 to 34, **characterized in that** it is produced in a prefabrication plant.

**Patentansprüche**

1. Beton mit einer nach 28 Tagen bewerteten Biegefestigkeit Rfl von wenigstens 15 MPa, die an prismatischen Probekörpern durch 4-Punkt-Biegeversuche nach dem durch die Norm NF P 18-409 definierten Arbeitsmodus gemessen wird, und mit darin dispergierten Metallfasern, der erhalten wird durch Mischen einer Zusammensetzung, die Folgendes umfasst, mit Wasser:

a) einen Zement, dessen Teilchen eine D50-Korngröße von 10 $\mu$m bis 20 $\mu$m haben;

b) ultrafeine, puzzolanisch reagierende Elemente, deren Primärteilchen eine D50-Korngröße von höchstens 1 $\mu$m haben;

c) granuläre Elemente, die zwischen zwei Kornklassen $C_1$ und $C_2$ verteilt sind, welche folgendermaßen definiert sind:

$C_1$: Teilchen mit einer Größe von über 1 $\mu$m und unter 5 mm;

$C_2$: Teilchen mit einer Größe von 6 bis 12 mm;

d) eine Wassermenge E, die zu dem Gemisch gegeben wird;

e) ein Dispergiermittel, vorzugsweise ein Hochleistungsfließmittel (Superplasticizer), das in einem Anteil an der Trockenmasse von 1,5 bis 5 Vol.-% vorhanden ist, bezogen auf den Zement;

f) Metallfasern, die in einer Menge von höchstens 120 kg pro m$^3$ Beton vorhanden sind und eine solche individuelle Länge L haben, dass der Beton ein Verhältnis L/$\phi$ von wenigstens 2 und vorzugsweise wenigstens 3 aufweist, wobei L die individuelle Länge der Fasern ist und $\phi$ der Durchmesser der größten Körner ist;

**dadurch gekennzeichnet, dass** die als Volumenanteil ausgedrückten Gehalte der verschiedenen Bestandteile (a), (b), ($C_1$), ($C_2$) und der Wassermenge E den folgenden Beziehungen genügen:

$$\text{Verhältnis 1} \qquad 0{,}50 \leq (C_2)/(C_1) \leq 1{,}20$$

$$\text{Verhältnis 2} \qquad 0{,}25 \leq [(a)+(b)]/[(C_1)+(C_2)] \leq 0{,}60$$

$$\text{Verhältnis 3} \qquad 0{,}10 \leq (b)/(a) \leq 0{,}30$$

$$\text{Verhältnis 4} \qquad 0{,}50 \leq E/[(a)+(b)] \leq 0{,}75.$$

2.  Beton gemäß Anspruch 1, **dadurch gekennzeichnet, dass**:

a) die Zementteilchen (a) eine Korngröße D50 in der Größenordnung von 15 $\mu$m haben;

b) die ultrafeinen, puzzolanisch reagierenden Elemente (b) eine D50-Teilchengröße von unter 1 $\mu$m haben.

3.  Beton gemäß Anspruch 1 oder 2, **dadurch gekennzeichnet, dass** in dem Fall, dass der erhaltene Beton eine feste bis fließfähige Konsistenz hat, die folgende Beziehung für das Verhältnis 2 der als Volumenanteil ausgedrückten Gehalte an den Bestandteilen (a), (b), (C1), (C2) gilt:

$$\text{Verhältnis 2} \qquad 0{,}25 \leq [(a)+(b)]/[(C_1)+(C_2)] \leq 0{,}45.$$

4.  Beton gemäß Anspruch 1 oder 2, **dadurch gekennzeichnet, dass** in dem Fall, dass der erhaltene Beton eine selbstverdichtende Konsistenz hat, die folgende Beziehung für das Verhältnis 2 der als Volumenanteil ausgedrückten Gehalte an den Bestandteilen (a), (b), (C1), (C2) gilt:

$$\text{Verhältnis 2} \qquad 0{,}45 \leq [(a)+(b)]/[(C_1)+(C_2)] \leq 0{,}60.$$

5.  Beton gemäß einem der vorstehenden Ansprüche, **dadurch gekennzeichnet, dass** unabhängig von der Konsistenz des erhaltenen Betons die folgenden Beziehungen für die Verhältnisse 1, 3, 4 der als Volumenanteil ausgedrückten Gehalte an den Bestandteilen (a), (b), (C1), (C2) und der Wassermenge E gilt:

$$\text{Verhältnis 1} \qquad 0{,}60 \leq (C_2)/(C_1) \leq 1{,}0$$

$$\text{Verhältnis 3} \qquad 0{,}15 \leq (b)/(a) \leq 0{,}25$$

$$\text{Verhältnis 4} \qquad 0{,}55 \leq E/[(a)+(b)] \leq 0{,}70.$$

6. Beton gemäß einem der vorstehenden Ansprüche, **dadurch gekennzeichnet, dass** der Zement ein Zement mit hohem Siliciumoxidgehalt ist, wobei der Zement wenigstens 20 Gew.-% kombiniertes Siliciumoxid umfasst, bezogen auf das Gewicht des Zements.

7. Beton gemäß einem der vorstehenden Ansprüche, **dadurch gekennzeichnet, dass** die Menge der Metallfasern in dem Beton 20 bis 120 kg/m$^3$ und vorzugsweise 40 bis 100 kg/m$^3$ Beton beträgt.

8. Beton gemäß einem der vorstehenden Ansprüche, **dadurch gekennzeichnet, dass** die Metallfasern Stahlfasern sind.

9. Beton gemäß Anspruch 8, **dadurch gekennzeichnet, dass** die Stahlfasern einen erhöhten Kohlenstoffgehalt von 0,7% bis 0,8% haben.

10. Beton gemäß Anspruch 8, **dadurch gekennzeichnet, dass** die Stahlfasern einen geringen Kohlenstoffgehalt von kleiner oder gleich 0,1% haben.

11. Beton gemäß einem der vorstehenden Ansprüche, **dadurch gekennzeichnet, dass** er auch kurze Fasern aus Polyvinylalkohol, Polyacrylnitril, Polyethylen hoher Dichte, Aramidpolyamid oder Polypropylen umfasst.

12. Beton gemäß einem der vorstehenden Ansprüche, **dadurch gekennzeichnet, dass** er ein Hochleistungsfließmittel (Superplasticizer) umfasst, das in einem Anteil an der Trockenmasse von 1,5 bis 5 Vol.-% und vorzugsweise 2,5 bis 3,5 Vol.-% vorhanden ist, bezogen auf den Zement.

13. Beton gemäß einem der vorstehenden Ansprüche, **dadurch gekennzeichnet, dass** das Hochleistungsfließmittel aus polyoxyethylenierten Phosphonaten, Polyoxpolycarboxylaten und ihren Gemischen ausgewählt ist.

14. Beton gemäß einem der vorstehenden Ansprüche, **dadurch gekennzeichnet, dass** er eine an zylindrischen Probekörpern gemessene Druckfestigkeit Rc von größer oder gleich 120 MPa aufweist, wobei die Druckfestigkeit nach 28 Tagen bewertet wird.

15. Beton gemäß einem der vorstehenden Ansprüche, **dadurch gekennzeichnet, dass** die ultrafeinen, puzzolanisch reagierenden Elemente (b) aus Quarzstaub bestehen.

16. Beton gemäß einem der vorstehenden Ansprüche, **dadurch gekennzeichnet, dass** die granulären Elemente (c) gesiebte oder gemahlene Granulate oder Gemische von Granulaten sind.

17. Gewölbesteine, Platten, Elemente vom Typ Tafeln oder Schalen, **dadurch gekennzeichnet, dass** sie aus einem Beton gemäß einem der Ansprüche 1 bis 16 bestehen.

18. Vorgefertigtes Element, **dadurch gekennzeichnet, dass** es aus einem Beton besteht, wie er gemäß einem der Ansprüche 1 bis 16 definiert ist.

**19.** Verfahren zur Herstellung eines Betons mit einer nach 28 Tagen bewerteten Biegefestigkeit Rfl von wenigstens 15 MPa, die an prismatischen Probekörpern durch 4-Punkt-Biegeversuche nach dem durch die Norm NF P 18-409 definierten Arbeitsmodus gemessen wird, und mit darin dispergierten Metallfasern, der das Gemisch einer Wassermenge E mit einer Zusammensetzung umfasst, die Folgendes umfasst:

a) einen Zement, dessen Teilchen eine D50-Korngröße von 10 $\mu$m bis 20 $\mu$m haben;
b) ultrafeine, puzzolanisch reagierende Elemente, deren Primärteilchen eine D50-Korngröße von höchstens 1 $\mu$m haben;
c) granuläre Elemente, die zwischen zwei Kornklassen $C_1$ und $C_2$ verteilt sind, welche folgendermaßen definiert sind:

$C_1$: Teilchen mit einer Größe von über 1 $\mu$m und unter 5 mm;
$C_2$: Teilchen mit einer Größe von 6 bis 12 mm;

e) ein Dispergiermittel, vorzugsweise ein Hochleistungsfließmittel (Superplasticizer), das in einem Anteil an der Trockenmasse von 1,5 bis 5 Vol.-% vorhanden ist, bezogen auf den Zement;
f) Metallfasern, die in einer Menge von höchstens 120 kg pro m$^3$ Beton vorhanden sind und eine solche individuelle Länge L haben, dass der Beton ein Verhältnis L/$\phi$ von wenigstens 2 und vorzugsweise wenigstens 3 aufweist, wobei L die individuelle Länge der Fasern ist und $\phi$ der Durchmesser der größten Körner ist;

**dadurch gekennzeichnet, dass** die als Volumenanteil ausgedrückten Gehalte der verschiedenen Bestandteile (a), (b), ($C_1$), ($C_2$) und der Wassermenge E den folgenden Beziehungen genügen:

$$\text{Verhältnis 1} \qquad 0{,}50 \leq (C_2)/(C_1) \leq 1{,}20$$

$$\text{Verhältnis 2} \qquad 0{,}25 \leq [(a)+(b)]/[(C_1)+(C_2)] \leq 0{,}60$$

$$\text{Verhältnis 3} \qquad 0{,}10 \leq (b)/(a) \leq 0{,}30$$

$$\text{Verhältnis 4} \qquad 0{,}50 \leq E/[(a)+(b)] \leq 0{,}75.$$

**20.** Verfahren gemäß Anspruch 19, **dadurch gekennzeichnet, dass**:

a) die Zementteilchen (a) eine Korngröße D50 in der Größenordnung von 15 $\mu$m haben;
b) die ultrafeinen, puzzolanisch reagierenden Elemente (b) eine D50-Teilchengröße von unter 1 $\mu$m haben.

**21.** Verfahren gemäß Anspruch 19 oder 20, **dadurch gekennzeichnet, dass** in dem Fall, dass der erhaltene Beton eine feste bis fließfähige Konsistenz hat, die folgende Beziehung für das Verhältnis 2 der als Volumenanteil ausgedrückten Gehalte an den Bestandteilen (a), (b), (C1), (C2) gilt:

$$\text{Verhältnis 2} \qquad 0{,}25 \leq [(a)+(b)]/[(C_1)+(C_2)] \leq 0{,}45.$$

**22.** Verfahren gemäß Anspruch 19 oder 20, **dadurch gekennzeichnet, dass** in dem Fall, dass der erhaltene Beton eine selbstverdichtende Konsistenz hat, die folgende Beziehung für das Verhältnis 2 der als Volumenanteil ausgedrückten Gehalte an den Bestandteilen (a), (b), (C1), (C2) gilt:

$$\text{Verhältnis 2} \qquad 0{,}45 \leq [(a)+(b)]/[(C_1)+(C_2)] \leq 0{,}60.$$

**23.** Verfahren gemäß einem der Ansprüche 19 bis 22, **dadurch gekennzeichnet, dass** unabhängig von der Konsistenz des erhaltenen Betons die folgenden Beziehungen für die Verhältnisse 1, 3, 4 der als Volumenanteil ausgedrückten Gehalte an den Bestandteilen (a), (b), (C1), (C2) und der Wassermenge E gilt:

$$\text{Verhältnis 1} \qquad 0{,}60 \leq (C_2)/(C_1) \leq 1{,}0$$

$$\text{Verhältnis 3} \qquad 0{,}15 \leq (b)/(a) \leq 0{,}25$$

$$\text{Verhältnis 4} \qquad 0{,}55 \leq E/[(a)+(b)] \leq 0{,}70.$$

**24.** Verfahren gemäß einem der Ansprüche 19 bis 23, **dadurch gekennzeichnet, dass** der Zement ein Zement mit hohem Siliciumoxidgehalt ist, wobei der Zement wenigstens 20 Gew.-% kombiniertes Siliciumoxid umfasst, bezogen auf das Gewicht des Zements.

**25.** Verfahren gemäß einem der Ansprüche 19 bis 24, **dadurch gekennzeichnet, dass** die Menge der Metallfasern in dem Beton 20 bis 120 $kg/m^3$ und vorzugsweise 40 bis 100 $kg/m^3$ Beton beträgt.

**26.** Verfahren gemäß einem der Ansprüche 19 bis 25, **dadurch gekennzeichnet, dass** die Metallfasern Stahlfasern sind.

**27.** Verfahren gemäß Anspruch 26, **dadurch gekennzeichnet, dass** die Stahlfasern einen erhöhten Kohlenstoffgehalt von 0,7% bis 0,8% haben.

**28.** Verfahren gemäß Anspruch 26, **dadurch gekennzeichnet, dass** die Stahlfasern einen geringen Kohlenstoffgehalt von kleiner oder gleich 0,1% haben.

**29.** Verfahren gemäß einem der Ansprüche 19 bis 28, **dadurch gekennzeichnet, dass** er auch kurze Fasern aus Polyvinylalkohol, Polyacrylnitril, Polyethylen hoher Dichte, Aramidpolyamid oder Polypropylen umfasst.

**30.** Verfahren gemäß einem der Ansprüche 19 bis 29, **dadurch gekennzeichnet, dass** er ein Hochleistungsfließmittel (Superplasticizer) umfasst, das in einem Anteil an der Trockenmasse von 1,5 bis 5 Vol.-% und vorzugsweise 2,5 bis 3,5 Vol.-% vorhanden ist, bezogen auf den Zement.

**31.** Verfahren gemäß einem der Ansprüche 19 bis 30, **dadurch gekennzeichnet, dass** das Hochleistungsfließmittel aus polyoxyethylenierten Phosphonaten, Polyoxpolycarboxylaten und ihren Gemischen ausgewählt ist.

**32.** Verfahren gemäß einem der Ansprüche 19 bis 31, **dadurch gekennzeichnet, dass** der Beton eine an zylindrischen Probekörpern gemessene Druckfestigkeit Rc von größer oder gleich 120 MPa aufweist, wobei die Druckfestigkeit nach 28 Tagen bewertet wird.

**33.** Verfahren gemäß einem der Ansprüche 19 bis 32, **dadurch gekennzeichnet, dass** die ultrafeinen, puzzolanisch reagierenden Elemente (b) aus Quarzstaub bestehen.

**34.** Verfahren gemäß einem der Ansprüche 19 bis 33, **dadurch gekennzeichnet, dass** die granulären Elemente (c) gesiebte oder gemahlene Granulate oder Gemische von Granulaten sind.

**35.** Verfahren gemäß einem der Ansprüche 19 bis 34, **dadurch gekennzeichnet, dass** es in einer Betonzentrale gebrauchsfertig durchgeführt wird.

**36.** Verfahren gemäß einem der Ansprüche 19 bis 34, **dadurch gekennzeichnet, dass** es in einer Vorfertigungsfabrikzentrale durchgeführt wird.

EP 1 315 683 B1

Figure 1 : Comportement en flexion (4 points) du béton O3.

Figure 2 : Comportement en flexion (4 points) du béton O5.

22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9928267 A
- EP 934915 A

- FR 2633922
- US 6080234 A